# EUROPÄISCHE PATENTSCHRIFT

(11) **EP 0 875 491 B1**
(45) Veröffentlichungstag und Bekanntmachung des Hinweises auf die Patenterteilung: **14.05.2003**
(21) Anmeldenummer: 98102417.7
(22) Anmeldetag: 12.02.1998
(51) Int. Cl.: C04B 7/60

(54) **Verfahren und Anlage zur Verringerung von Schadstoff-Kreisläufen bei der Herstellung von Zementklinker aus Rohmehl**
Method and apparatus for the control of the internal cycling of pollutants occuring during the production of clinker from raw meal
Procédé et dispositif pour le contrôle des cycles internes de polluants lors de la fabrication de clinker à partir de farine crue

(30) Priorität: 30.04.1997 DE 19718259
(43) Veröffentlichungstag der Anmeldung: 04.11.1998
(73) Patentinhaber: KHD Humboldt-Wedag AG, 51103 Köln (DE)
(72) Erfinder: Hunold, Peter, 51519 Odenthal (DE); Carstens, Frank, 51107 Köln (DE); Keller, Günter, 51429 Bergisch Gladbach (DE); Meyer, Hans W., Dr., 90579 Langenzenn (DE)

(56) Entgegenhaltungen:
- EP-A- 0 534 225
- DE-A- 3 905 454
- US-A- 5 375 535

## Beschreibung

Die Erfindung betrifft ein Verfahren zur Verringerung von Schadstoff-Kreisläufen, insbesondere von Kreisläufen von Alkali- und Chloridverbindungen bei einer Anlage zur Herstellung von Zementklinker aus Rohmehl, das in wenigstens einem vom Abgas eines Drehrohrofens durchströmten Wärmetauscherstrang insbesondere Zyklonschwebegaswärmetauschersystem vorerhitzt und in der Sinterzone des Drehrohrofens zu Zementklinker gebrannt wird, der in einem nachgeschalteten Kühler gekühlt wird, mit einem Bypass- bzw. Teilgasabzug zum Abzug eines schadstoffhaltigen Teilstromes des Drehofenabgases aus der Drehofeneinlaufkammer, mit Kühlung und Entstaubung des abgezogenen Teilgasstromes.

Dieses Verfahren und eine zu dessen Durchführung geeignete Vorrichtung ist aus EP-A- 534 225 bekannt.

In der Zementtechnologie ist es bekannt, daß viele Einsatzstoffe zur Zementklinkerherstellung Nebenbestandteile wie z.B. Alkaliverbindungen, Chlor, Schwefel, Schwermetalle etc. enthalten, die im Bereich der Sinterzone z.B. als Alkalichlorid- und Alkalisulfatverbindungen verdampfen, im Vorwärmerbereich wieder kondensieren und somit Kreisläufe aufbauen, wodurch sowohl die Qualität des Zementklinkers ungünstig beeinflußt als auch der Brennprozeß selbst erheblich gestört werden kann. Zur Unterdrückung eines Alkalikreislaufes in einer Zementklinkerbrennanlage sowie zur Reduzierung des Alkaligehaltes im Zementklinker ist es bekannt, durch einen sogenannten Bypaßgasabzug bzw. Teilgasabzug einen Teil der die Alkaliverbindungen enthaltenden Ofenabgase am unteren Bereich des Abgassteigrohres zwischen Drehrohrofen und Schwebegasvorwärmer bzw. Calcinator abzuzweigen und abzuführen, also bei einem Temperaturniveau, bei welchem die flüchtigen Bestandteile noch nicht kondensiert sind, um dann anschließend in die Teilgasstrom-Abzugsleitung Rohmehl sowie auch Prozeßstaub als Kodensationskeime und ein Kühlmedium wie Wasser und/oder Außenluft einzubringen und die im Teilgasstrom enthaltenen Schadstoffe an den Feststoffen kondensieren zu lassen (DE-A-32 15 793 sowie z.B. Aufsatz "Probleme der Elektroentstaubung hochalkalichloridhaltiger Abgase aus Teilgasabzügen bei Wärmetauscher-Trockendrehöfen" in DE-Z "Zement-Kalk-Gips" Nr. 5/1978 Seiten 236 bis 238). Sind dabei der abgezogene Teilgasstrom sowie der mit diesem mitgezogene Staub hochalkalihaltig, müssen der aus dem Teilgasstrom abgetrennte Bypaßfilterstaub sowie auch der ggfs. nur ungenügend gereinigte Teilgasstrom selbst verworfen werden.

Andererseits geht die Entwicklung von Drehrohröfen für den Zementklinkerbrand dahin, möglichst kurze Drehrohröfen einzusetzen, die nur noch auf zwei Lagerstationen gelagert sind. Kurze Drehrohröfen haben vergleichsweise hohe Ofenabgastemperaturen von z.B. 1300° C zur Folge, die zu einer hohen thermischen Beanspruchung der Ofeneinlaufkammer führen. Es wäre aber nicht möglich, die Ofeneinlaufkammer mittels eines Kühlmantels zu kühlen, weil gerade Rohmehle, die wegen ihrer chemischen Bestandteile zu Verklebungen neigen, schon in der Ofeneinlaufkammer anbacken würden.

Der Erfindung liegt die Aufgabe zugrunde, bei Zementklinker-Produktionsanlagen inbesondere mit kurzem Drehrohrofen und mit Einsatz von schadstoffhaltigen, zu Anbackungen neigenden Rohmehlen und mit Bypaß- bzw. Teilgasabzug zum Abzug eines Teilstromes des Drehofenabgases einen Weg zu finden, wie die Produktionsanlage betriebssicher betrieben und dabei die thermisch hoch beanspruchte Drehofeneinlaufkammer geschützt werden kann.

Diese Aufgabe wird verfahrensmäßig mit den Maßnahmen des Kennzeichnungsteils des Anspruchs 1 und vorrichtungsmäßig mit den Merkmalen des Kennzeichnungsteils des Anspruchs 4 gelöst. Vorteilhafte Ausgestaltungen sind in den Unteransprüchen angegeben.

Bei der erfindungsgemäßen Produktion von Zementklinker mit Bypaß- bzw. Teilgasabzug werden Rohmehl bzw. Prozeßstäube als Kondensationskeime nicht in den Teilgasstrom eingeführt, nachdem dieser aus der Ofeneinlaufkammer abgezogen worden ist, sondern es wird erstmalig vorgeschlagen, solche Kondensationskeime in den Teilgasstrom einzuführen, bevor dieser der Ofeneinlaufkammer entnommen wird, d.h. im Prozeß anfallende Mehle bzw. Prozeßstäube werden als Kondensationskeime bereits direkt in den oberen Bereich der Ofeneinlaufkammer eingeführt und zwar etwa in Nähe der Teilgasstrom-Abzugsöffnung, so daß sichergestellt ist, daß die in den oberen Bereich der Ofeneinlaufkammer eingeführten Feststoffe (Mehl, Prozeßstaub) tatsächlich dann vom Teilgasstrom mitgerissen werden. Der künstliche Staubkreislauf erhöht die Konzentration der Kondensationskeime im Teilgasstrom ganz erheblich. Dabei erfüllen die bereits in die Ofeneinlaufkammer eingeführten Kondensationskeime wenigstens zwei Aufgaben: Das Drehofenabgas kühlt sich in der Ofeneinlaufkammer nicht etwa an gekühlten Wandungen der Ofeneinlaufkammer ab, sondern an den im Vergleich zu den heißen Drehofenabgasen kälteren Kondensationskeimen, z.B. von 1300° C auf 1150°C, wodurch zum einen die thermisch hoch beanspruchte Ofeneinlaufkammer geschützt wird. Zum anderen können die im Drehofenabgas enthaltenen gas- bzw. dampfförmigen Schadstoffe wie insbesondere Alkalichloride und Alkalisulfate schon in der Ofeneinlaufkammer beginnen, an den dort eingebrachten Kondensationskeimen zu kondensieren (auszufrieren bzw. zu sublimieren). Jedenfalls werden die Kondensationskeime aus der Ofeneinlaufkammer mit dem Teilgasstrom abgesaugt, der außerhalb der Ofeneinlaufkammer, zweckmäßigerweise in einer oberhalb der Teilgasstrom-Abzugsöffnung angeordneten Mischkammer durch Zumischung von Wasser und/oder Kühlluft weiter abgekühlt wird, z.B. auf 370° C, um aus dem Teilgasstrom mit Sicherheit alle kondensierbaren Schadstoffe auszufrieren, die anschließend in einem Staubabscheider, insbesondere elektrostatischen Staubabscheider betriebssicher vom gereinigten Teilgasstrom abgetrennt werden können.

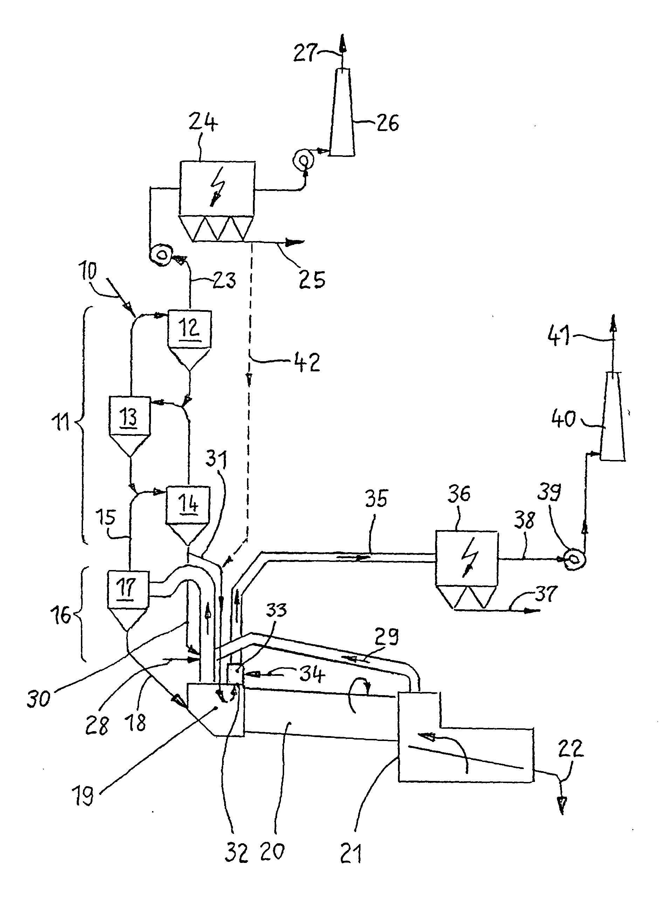

Die Erfindung und deren weitere Merkmale und Vorteile werden anhand des in der Zeichnung schematisch dargestellten Ausführungsbeispieles näher erläutert.

Die Zeichnung zeigt eine Anlage zur Herstellung von Zementklinker aus schadstoffhaltigem Zementrohmehl, das bei 10 in die Vorwärmstufe 11 aufgegeben wird, wo es nacheinander die Zyklonschwebegas-Wärmetauscher 12 bis 14 im kombinierten Gleich-/Gegenstrom zum heißen Abgas 15 einer Calcinierstufe 16 durchwandert, um im untersten Zyklon 17 vom heißen Abgasstrom 15 abgetrennt und als hochgradig (z.B. 95%) calciniertes Zementrohmehl 18 in die Einlaufkammer 19 des Drehrohrofens 20 eingeführt zu werden, in dessen Sinterzone es zu Zementklinker gebrannt wird, der anschließend in einem Klinkerkühler 21, im Ausführungsbeispiel ein Rostkühler, abgekühlt wird. Der abgekühlte Zementklinker verläßt den Klinkerkühler 21 bei 22.

Das am Zementrohmehl abgekühlte Abgas verläßt die Vorwärmstufe 11 der Anlage bei 23. Dieses Abgas 23 wird in einem Staubabscheider, z.B. elektrostatischen Staubabscheider 24 von Staub 25 befreit und anschließend über einen Hauptkamin 26 als Abgas 27 abgezogen. In der mit Brennstoff 28 und Tertiärluft 29 des Klinkerkühlers versorgten Calcinierstufe 16 wird das aus der zweituntersten Zyklonstufe 14 austretende vorgewärmte Zementrohmehl 30 hochgradig calciniert.

Von der aus der zweituntersten Zyklonstufe 14 austretenden Heißmehlleitung 30 ist eine Mehlleitung 31 abgezweigt, die in den oberen Bereich der Ofeneinlaufkammer 19 eingeführt ist, und zwar etwa in Nähe einer Öffnung 32, durch welche z.B. 5 bis 10% der Drehofenabgasmenge als heißer schadstoffhaltiger Bypaß- bzw. Teilgasstrom abgezogen werden. Durch das über die Leitung 31 in die Ofeneinlaufkammer 19 eingeführte Mehl wird das Drehofenabgas, das bei einem kurzen Drehrohrofen 20 eine Austrittstemperatur von z.B. 1300° C ohne weiteres aufweisen kann, auf eine Temperatur von z.B. 1150° C abgekühlt, wodurch die thermisch hoch beanspruchte Einlaufkammer 19 geschützt wird. Andererseits dienen die über Leitung 31 eingeführten Mehlpartikel als Kondensationskeime, an denen die im Drehofenabgas enthaltenen gas- bzw. dampfförmigen Schadstoffe kondensieren können. Die Kondensationskeime werden dann zusammen mit dem Teilgasstrom durch die Abzugsöffnung 32 hindurch in eine außerhalb der Einlaufkammer angesetzte Mischkammer 33 eingesaugt, in die Wasser 34 eingespritzt wird, wodurch der mit den Kondensationskeimen beladene Teilgasstrom von z.B. 1100° C auf z.B. 370° C weiter abgekühlt wird, bevor der Teilgasstrom 35 dann anschließend in einem Abscheider, insbesondere elektrostatischen Staubabscheider 36 vom schadstoffhaltigen Staub 37 befreit wird. Der gereinigte Teilgasstrom 38 wird über Saugzuggebläse 39 und Kamin 40, 41 abgezogen. Ein zum Betrieb des elektrostatischen Staubabscheiders 36 sonst notwendiger, diesem vorgeschalteter Kühlturm zwecks Teilgasstrom-Konditionierung entfällt.

Anstelle des Heißmehls 31 oder zusätzlich zu diesem können in die Ofeneinlaufkammer 19 auch kaltes Zementrohmehl, Ofenfilterstaub über Leitung 42, und/oder auch insbesondere der gröbere Anteil des Bypaßfilterstaubes 37 eingeführt werden.

Bei Benutzung nur von Wasser 34 als Kühlmedium, nicht von Kühlluft, werden das Volumen des Teilgasstroms 35 und damit auch die Baugröße des Staubabscheiders 36 minimiert. Als in den Teilgasstrom eingespritztes Wasser 34 kann auch Seewasser oder auch Brauchwasser herangezogen werden.

Mit der Erfindung gelingt eine sehr effektive Abscheidung von alkaliund chloridreichen Stäuben aus Teilgasabzügen von Zementklinkerproduktionslinien.

## Patentansprüche

1. Verfahren zur Verringerung von Schadstoff-Kreisläufen, insbesondere von Kreisläufen von Alkali- und Chloridverbindungen bei einer Anlage zur Herstellung von Zementklinker aus Rohmehl, das in wenigstem einem vom Abgas eines Drehrohrofens (20) durchströmten Wärmetauscherstrang insbesondere Zyklonschwebegaswärmetauschersystem (11) vorerhitzt und in der Sinterzone des Drehrohrofens zu Zementklinker gebrannt wird, der in einem nachgeschalteten Kühler (21) gekühlt wird, mit einem Bypaß- bzw. Teilgasabzug (35) zum Abzug eines schadstoffhaltigen Teilstromes des Drehofenabgases aus der Drehofeneinlaufkammer (19), mit Kühlung und Entstaubung des abgezogenen Teilgasstromes,
**dadurch gekennzeichnet, daß** in den oberen Bereich der Drehofeneinlaufkammer (19) im Prozeß anfallendes Mehl (31) bzw. Prozeßstaub (42) als Kondensationskeime eingeführt werden, die vom abgezogenen Teilgasstrom (35) mitgerissen werden, der anschließend durch Einführung von Wasser (34) und/oder Kühlluft vor seiner Entstaubung in einem Staubabscheider (36) weiter abgekühlt wird.

2. Verfahren nach Anspruch 1,
**dadurch gekennzeichnet, daß** als Kondensationskeime dienendes Mehl bzw. Prozeßstaub kaltes Zementrohmehl und/oder Heißmehl (31) und/oder Ofenfilterstaub (42) und/oder selektierter Bypaßfilterstaub verwendet wird.

3. Verfahren nach Anspruch 1,
**dadurch gekennzeichnet, daß** als Wasser (34) zur Kühlung des Teilgasstromes (35) Süßwasser und/oder Seewasser und/oder Brauchwasser verwendet wird.

4. Anlage zur Herstellung von Zementklinker aus schadstoffhaltigem Rohmehl, das in wenigstens einem vom Abgas eines Drehrohrofens (20) durchströmten Wärmetauscherstrang insbesondere Zyklonschwebegaswärmetauschersystem (11) vorerhitzt und in der Sinterzone des Drehrohrofens zu Zementklinker gebrannt wird, der in einem nachgeschalteten Kühler (21) gekühlt wird, mit einem Bypaß- bzw. Teilgasabzug (35) zum Abzug eines schadstoffhaltigen Teilstromes des Drehofenabgases aus der Drehofeneinlaufkammer (19), mit Kühlung und Entstaubung des abgezogenen Teilgasstromes,
**dadurch gekennzeichnet, daß** in die Drehofeneinlaufkammer (19) in Nähe der Teilgasstromabzugsöffnung (32) eine Leitung (31) zur Zufuhr von im Prozeß anfallendem Mehl und/oder Prozeßstaub eingeführt ist, und daß an die Teilgasstrom- Abzugsöffnung außerhalb der Ofeneinlaufkammer (19) eine Mischkammer (33) zur Zumischung von Wasser (34) und/oder Kühlluft in den mit Kondensationskeimen versetzten Teilgasstrom (35) angesetzt ist.

5. Anlage nach Anspruch 4,
**dadurch gekennzeichnet, daß** die in die Ofeneinlaufkammer (19) in Nähe der Teilgasstromabzugsöffnung (32) eingeführte Mehlleitung (31) als Mehlteilstrom von der Heißmehlleitung (30) abgezweigt ist, die von der zweituntersten Zyklonstufe (14) des Zyklonschwebegaswärmetauschersystems (11) zur Calcinierstufe (16) führt.

## Claims

1. Method for reducing the levels of pollutant cycles, in particular cycles of alkali metal and chloride compounds, in a plant for the production of cement clinker from raw meal which is preheated in at least one heat-exchanger section, in particular a cyclone suspension heat exchanger system (11), through which the off-gas from a rotary tubular kiln (20) flows, and is burnt in the sintering zone of the rotary tubular kiln to form cement clinker, which is cooled in a downstream cooler (21), having a by-pass or partial gas take-off (35) for removing a pollutant-containing partial stream of the rotary kiln off-gas from the rotary kiln inlet chamber (19), with cooling and dedusting of the extracted partial gas stream, **characterized in that** process dust (42) and/or meal (31) produced in the process in the upper region of the rotary-kiln inlet chamber (19) are introduced as condensation nuclei which are entrained by the extracted partial gas stream (35), which is then cooled further by the introduction of water (34) and/or cooling air prior to its dedusting in a dust separator (36).

2. Method according to Claim 1, **characterized in that** cold cement raw meal and/or hot meal (31) and/or kiln filter dust (42) and/or selected bypass filter dust is used as meal or process dust serving as condensation nuclei.

3. Method according to Claim 1, **characterized in that** fresh water and/or sea water and/or service water is used as water (34) for cooling the partial gas stream (35).

4. Plant for the production of cement clinker from pollutant-containing raw meal which is preheated in at least one heat-exchanger section, in particular a cyclone suspension heat exchanger system (11), through which the off-gas from a rotary tubular kiln (20) flows, and is burnt in the sintering zone of the rotary tubular kiln to form cement clinker, which is cooled in a downstream cooler (21), having a bypass or partial gas take-off (35) for removing a pollutant-containing partial stream of the rotary kiln off-gas from the rotary-kiln inlet chamber (19), with cooling and dedusting of the extracted partial gas stream, **characterized in that** a line (31) for supplying process dust and/or meal which is produced during the process is introduced into the rotary-kiln inlet chamber (19) in the vicinity of the partial gas stream take-off opening (32), and **in that** a mixing chamber (33), for mixing water (34) and/or cooling air into the partial gas stream (35), which is laden with condensation nuclei, is fitted to the partial gas stream take-off opening outside the kiln inlet chamber (19).

5. Plant according to Claim 4, **characterized in that** the meal line (31) which is introduced into the kiln inlet chamber (19) in the vicinity of the partial gas stream take-off opening (32) is branched off as a meal part stream from the hot meal line (30), which leads from the second-lowest cyclone stage (14) of the cyclone suspension heat exchanger system (11) to the calcining stage (16).

## Revendications

1. Procédé pour la diminution de circulations de substances nuisibles, en particulier de circulations de composés alcalins et chlorure dans une installation de production de clinker à partir de cru, qui est préchauffé dans au moins une ligne d'échangeurs de chaleur traversée par un effluent gazeux d'un four rotatif (20), en particulier un système (11) échangeur de chaleur à cyclones par mise en suspension dans un gaz, et qui est calciné dans la zone de frittage du four rotatif en clinker qui est refroidi dans un refroidisseur (21) disposé en aval, avec un soutirage (35) de dérivation ou, selon le cas, partiel de gaz pour soutirer un flux partiel contenant des substances nuisibles de l'effluent gazeux du four rotatif de la chambre d'admission (19) du four rotatif, avec refroidissement et dépoussiérage du flux gazeux partiel soutiré, **caractérisé en ce qu'**on introduit, dans la zone supérieure de la chambre d'admission (19) du four rotatif, des fines (31) ou, selon le cas, des poussières de processus (42) produites dans le processus comme germes de condensation qui sont entraînés par le flux gazeux partiel (35) soutiré, qui est ensuite refroidi davantage par introduction d'eau (34) et/ou d'air de refroidissement avant son dépoussiérage dans un séparateur de poussière (36).

2. Procédé selon la revendication 1, **caractérisé en ce qu'**on utilise comme fines ou, selon le cas, poussières de processus servant de germes de condensation du cru de ciment froid et/ou des fines chaudes (31) et/ou des poussières (42) du filtre du four et/ou des poussières sélectionnées du filtre de dérivation.

3. Procédé selon la revendication 1, **caractérisé en ce qu'**on utilise comme eau (34) pour le refroidissement du flux gazeux partiel (35) de l'eau douce et/ou de l'eau de mer et/ou de l'eau industrielle.

4. Installation pour la production de clinker à partir de cru contenant des substances nuisibles, qui est préchauffé dans au moins une ligne d'échangeur de chaleur traversée par un effluent gazeux d'un four rotatif (20), en particulier un système (11) échangeur de chaleur à cyclones par mise en suspension dans un gaz, et qui est calciné dans la zone de frittage du four rotatif en clinker qui est refroidi dans un refroidisseur (21) disposé en aval, avec un soutirage (35) de dérivation ou, selon le cas, partiel de gaz pour soutirer un flux partiel contenant des substances nuisibles de l'effluent gazeux du four rotatif de la chambre d'admission (19) du four rotatif avec refroidissement et dépoussiérage du flux gazeux partiel soutiré, **caractérisée en ce qu'**une conduite (31) pour l'alimentation en fines et/ou en poussières de processus produites au cours du processus est introduite dans la chambre d'admission (19) du four rotatif, à proximité de l'ouverture de soutirage (32) du flux gazeux partiel et **en ce qu'**on a placé à proximité de l'ouverture de soutirage du flux gazeux partiel, à l'extérieur de la chambre d'admission (19) du four, une chambre de mélange (33) pour l'ajout d'eau (34) et/ou d'air de refroidissement dans le flux gazeux partiel (35) mélangé avec des germes de condensation.

5. Installation selon la revendication 4, **caractérisée en ce que** la conduite de fines (31) introduite dans la chambre d'admission (19) du four à proximité de l'ouverture de soutirage (32) du flux gazeux partiel est dérivée comme flux partiel de fines de la conduite (30) de fines chaudes, qui conduit du deuxième étage (14) à cyclone à partir du bas du système (11) échangeur de chaleur à cyclones par mise en suspension dans un gaz, vers l'étage de calcination (16).
